# EUROPEAN PATENT APPLICATION

(11) **EP 1 334 887 A1**
(43) Date of publication of application: **13.08.2003**
(21) Application number: 03075388.3
(22) Date of filing: 10.02.2003
(51) Int. Cl.: B60R 25/02, E05B 67/36, B62D 53/02

(54) **Lock construction for a power shovel**

(30) Priority: 08.02.2002 NL 1019927
(71) Applicant: Best Techniek B.V., 4651 RK Steenbergen (NL)
(72) Inventor: van Beers, Andreas Paulus Maria, 4651 RK Steenbergen (NL)
(74) Representative: Jorritsma, Ruurd

(57) **Abstract**

Power shovel comprising a front (2) and rear (1) part pivotably joined to one another. Locking thereof is obtained in that one of the parts is provided with a locking arm (15) that is pivotably fitted thereon and that is provided at the free end with an opening through which a pin (22) can be fitted. This pin can also be fitted through a lug (13) in the other part, as a result of which locking is obtained. According to the invention it is proposed to obstruct misuse of the power shovel by making removal of said pin possible only by removal of a lock (20) interacting therewith.

## Description

The present invention relates to a power shovel comprising a front part and a rear part which are pivotably joined to one another and wherein the rear part comprises an engine, driver's cab and rear axle and the front part comprises hydraulic rams for a bucket or the like as well as the front axle, means being present for locking the pivot joint between the front part and rear part, which means comprise a locking arm pivotably joined to the front or rear part, which locking arm is provided with an opening at the free end, as well as a lug provided with an opening mounted on the rear or front part, it being possible for said openings to be aligned for receiving a locking element.

A power shovel of this type is generally known in the state of the art. With this power shovel there is a locking arm pivotably fixed to the front or rear part. For transport, the opening in the free end of the locking arm is brought above an opening in a lug in the other part of the power shovel and a pin is inserted through these holes. Such locking is effected after the power shovel has been driven onto, for example, a low loader or the like. The locking of such a pivoting joint is disclosed in US-A 4 116 495.

One problem is that power shovels are to an increasing extent being stolen or temporarily misused, for example for carrying out so-called "ram raids". However, the costs of transporting a power shovel to a safe location with the aid of a low loader are high. Therefore, power shovels are frequently left on the building site at night and also over the weekend.

The aim of the present invention is to provide a simple and robust lock for a power shovel that cannot be released easily.

This aim is realised with a power shovel as above in that the locking element comprises lock means for securing said locking element.

According to the invention, the existing construction for locking the front and rear parts is used to prevent theft of the power shovel. After all, when the front and rear parts are locked the power shovel can no longer be driven anywhere. By preventing the pin from being able to be removed from the locking arm and associated lug, an anti-theft measure can be provided in a simple manner.

The lock means and the locking element can interact in any manner conceivable in the state of the art.

According to a preferred embodiment, the pin is provided with an opening extending transversely to the longitudinal axis close to the end that is not provided with the head. The pin of, for example, a U-lock can be fitted to this opening. It is, of course, also possible to use a heavy U-lock instead of the pin.

According to a further advantageous embodiment it is possible to provide that end of the pin that is remote from the head with a (partial) peripheral groove in which an accomodation of a lock can be inserted. By means of the present invention it is possible to position the lock means such that they are in very close contact with other parts of the construction of the power shovel.

As a result it is not easily possible to gain access to vulnerable parts of lock means. The locking arm is of such robust construction that it is not easy to saw or to cut this through.

The invention also relates to an assembly consisting of a pin provided with a head at one end and provided with engagement means at the other end, as well as lock means designed to be locked together with said engagement means, said pin being constructed to be accommodated between a locking arm and a lug of a power shovel.

The invention will be explained in more detail below with reference to an illustrative embodiment shown in the drawing.

In the drawing:
Fig. 1 shows a perspective view of a power shovel;
Fig. 2 shows a detail of the pivot joint between front and rear part of the power shovel according to Fig. 1;
Fig. 3 shows use of the present invention with said pivot joint; and
Fig. 4 shows a front view of a variant of the invention.

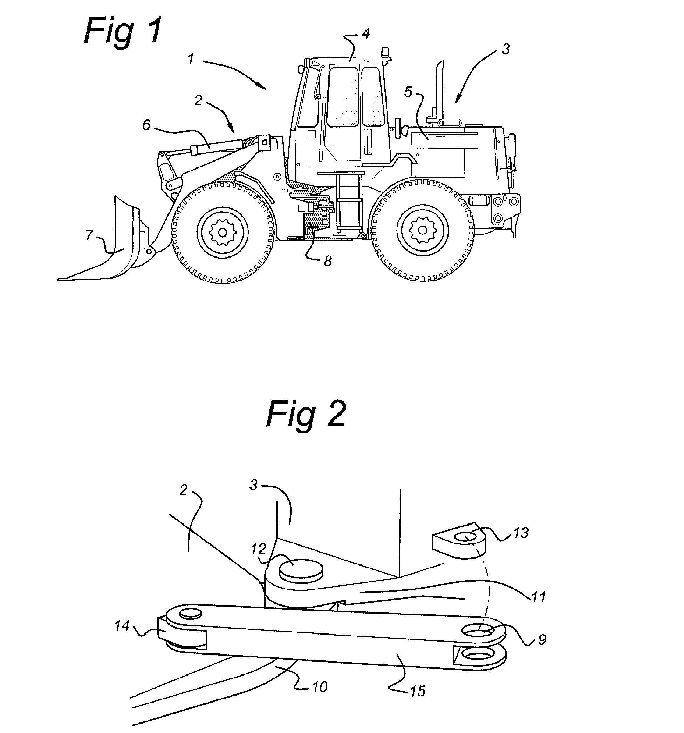

In Fig. 1 a power shovel is indicated by 1. This power shovel consists of a front part 2 and a rear part 3. The rear part is provided with a cab 4 and engine 5. Rams 6 (only a few are shown) and a bucket 7 are mounted on the front part. The front and rear parts are joined to one another via a joint 8. There are rams that are not shown for making it possible to turn the front part relative to the rear part and thus to provide steering. The joint 8 consists of a bottom plate 10 in front part 2 and a top plate 11 in rear part 3, as shown in Fig. 2. A heavy pivot pin 12 is fitted through these plates.

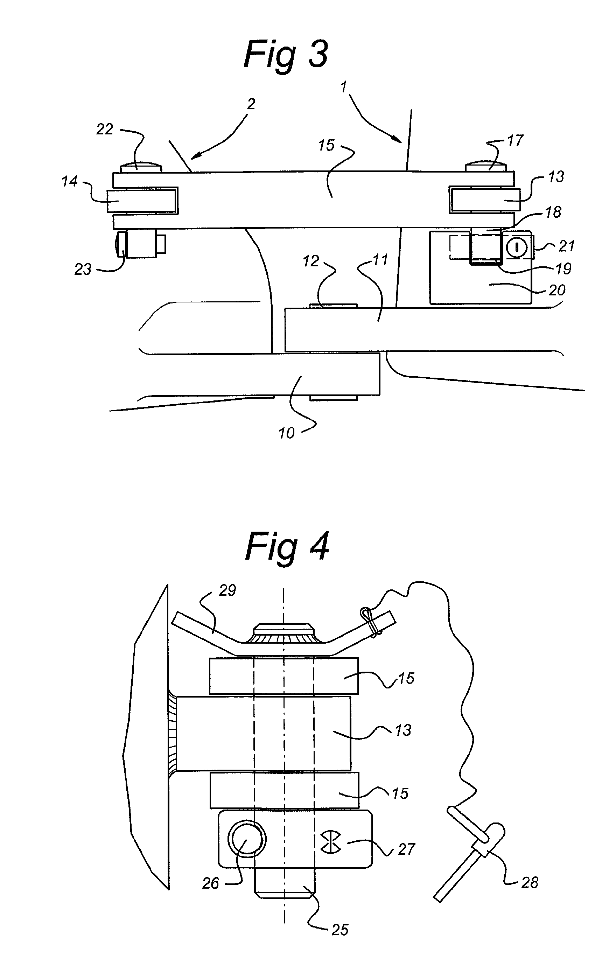

In order to prevent the power shovel from breaking free from, for example, a low loader when the power shovel is transported, the front part 2 and rear part 3 are locked with respect to one another. For this purpose the front part 2 is provided with a lug 14 to which a locking arm 15 is pivotably fixed via a pin 22 (Fig. 3). This locking arm 15 is provided with an opening 9 close to the free end thereof. As is indicated by a broken line in Fig. 2, this opening 9 can be brought above an opening made in a lug 13 on the rear part 3. According to the state of the art, a pin (not shown) is then fitted, as a result of which locking is perfect.

Such a pin 18 is also used according to the present invention, except that this pin is provided with special measures. This pin is shown in detail in Fig. 3 and is indicated in its entirety by 18. The head of this pin has reference numeral 17. As can be seen from Fig. 3, this pin extends through lug 13 and opening 9 in locking arm 15. According to the invention the free end of pin 18 is provided with a bore 19 extending transversely to the longitudinal axis thereof. A pin 21 of a lock 20 can be fitted through this bore 19, which projects beneath the locking arm 15 when the pin 18 is in the fitted position. This lock 20 is of relatively robust construction and, as can be seen from Fig. 3, it is impossible or virtually impossible to reach the vulnerable pin 21 using tools. Consequently, it is virtually impossible for persons of malicious intent to remove pin 18 in an undesired manner.

The other parts of the construction are likewise of particularly heavyweight construction, so that theft or other unauthorised use will not be easy for persons of malicious intent.

In order, for example, to prevent pin 22 being removed, this pin is provided on the underside with a securing element 23 that is unbreakably joined to pin 22 in some manner known in the state of the art.

A variant of the present invention is shown in Fig. 4. The removable pin is indicated in its entirety by 25 and is provided at the end remote from the head with a groove 26 that extends over a limited section of the periphery. The seat for a lock 27 with an opening can be inserted in this groove and locking of the lock can then be achieved using a pin for the lock. Locks of this type are generally known. An auxiliary bore that is not shown in more detail can be present at the free end of pin 25 for accommodating securing pin 28 if the lock 27 is not present.

It can also be seen from Fig. 4 that the head of the pin 25 is of reinforced construction in that a plate 29 has been fitted below the head, as a result of which releasing of the pin is further prevented.

It can be seen from the above that numerous variants are possible for securing the locking arm 15 with respect to lug 13 in such a way that unauthorised use is prevented. Further variants of what has been shown here will be immediately apparent to those skilled in the art and fall within the scope of the appended claims.

## Claims

1. Power shovel (1) comprising a front part (2) and a rear part (3) which are pivotably joined to one another and wherein the rear part comprises an engine (5), driver's cab (4) and rear axle and the front part (2) comprises hydraulic rams (6) for a bucket (7) or the like as well as the front axle, means (15) being present for locking the pivot joint between the front part and rear part, which means comprise a locking arm (15) pivotably joined to the front or rear part, which locking arm is provided with an opening (9) at the free end, as well as a lug (13, 14) provided with an opening mounted on the rear or front part, said openings being alignable for receiving a locking element (18, 25), **characterised in that** the locking element comprises lock means (20) for securing said locking element.

2. Power shovel according to Claim 1, wherein said locking element comprises a pin, to be accommodated in said opening, provided at one end with a head (18) and provided at the other end with a transverse opening (19) extending perpendicularly to the longitudinal axis of said pin, said lock means having a pin (21) extending through said transverse opening.

3. Power shovel according to one of the preceding claims, wherein said lock means comprise a U-lock.

4. Power shovel according to one of the preceding claims, wherein said locking element comprises a pin, to be accommodated in said openings, provided at one end with a head and provided at the other end with a peripheral groove (26), said lock means comprising an accomodation for accommodating the end of said pin provided with peripheral grooves.

5. Power shovel according to one of the preceding claims, wherein said locking arm is pivotably joined to the front or rear part.
